Europäisches Patentamt

European Patent Office

Office européen des brevets

(11) Numéro de publication : **0 404 628 B1**

# (12) FASCICULE DE BREVET EUROPEEN

(45) Date de publication du fascicule du brevet :
**30.12.92 Bulletin 92/53**

(51) Int. Cl.⁵ : **B60N 2/20, B60N 2/22**

(21) Numéro de dépôt : **90401558.3**

(22) Date de dépôt : **07.06.90**

(54) **Siège à dossier réglable et rabattable.**

(30) Priorité : **19.06.89 FR 8908120**

(43) Date de publication de la demande :
**27.12.90 Bulletin 90/52**

(45) Mention de la délivrance du brevet :
**30.12.92 Bulletin 92/53**

(84) Etats contractants désignés :
**BE DE ES GB IT NL SE**

(56) Documents cités :
**DE-A- 3 504 166
FR-A- 2 556 946
US-A- 4 178 037**

(73) Titulaire : **CESA COMPAGNIE EUROPEENNE
DE SIEGES POUR AUTOMOBILES
20, rue Paul-Vaillant-Couturier
F-92300 Levallois-Perret (FR)**

(72) Inventeur : **Fourrey, François
34, Rue du Petit Chênois
F-25200 Montbeliard (FR)**
Inventeur : **Colin, Pierre
2, rue des Fontenis
F-25350 Mandeure (FR)**
Inventeur : **Deley, Serge
1, Rue d'Audincourt
F-25230 Seloncourt (FR)**

(74) Mandataire : **Mestre, Jean
c/o CABINET LAVOIX 2, place d'Estienne
d'Orves
F-75441 Paris Cédex 09 (FR)**

EP 0 404 628 B1

Jouve, 18, rue Saint-Denis, 75001 PARIS

## Description

La présente invention concerne les sièges, et notamment les sièges de véhicule automobile, qui comportent une armature d'assise et une armature de dossier reliées entre elles par deux axes espacés et parallèles formant un axe d'inclinaison et un axe de rabattement, l'axe d'inclinaison étant porté par le dossier et verrouillé sur l'assise, tandis que l'axe de rabattement est solidaire de l'une de ces armatures et emboîté dans une lumière crantée de l'autre armature.

Elle a pour but de fournir un siège de ce type qui ait une très bonne tenue et puisse cependant prendre des positions variées.

Cette invention a en effet pour objet un siège à dossier réglable et rabattable, et notamment un siège de véhicule automobile du type ci-dessus, caractérisé en ce que l'axe de rabattement est formé par l'une des branches d'un organe dont une seconde branche, parallèle à la première, est également emboîtée dans la lumière crantée et forme une butée de limitation du rabattement.

Le dossier est ainsi solidement maintenu que ce soit en position verrouillée ou en position rabattue tout en étant facile à régler en inclinaison.

Selon un mode de réalisation, l'axe de rabattement et la butée sont formés aux extrémités d'une tige repliée et déplacée par le levier de déverrouillage.

La lumière crantée peut être ménagée dans l'armature d'assise et former un arc de cercle d'environ 90° dont l'extrémité supérieure est sensiblement dans le même plan horizontal que l'axe d'inclinaison.

Le pivotement maximal du dossier amène alors ce dernier dans le prolongement de l'assise et transforme le siège en couchette.

Selon une variante de réalisation, l'axe de rabattement et la butée sont formés par les deux branches d'un cavalier fixé dans l'armature d'assise et emboîté dans une lumière crantée solidaire de l'armature de dossier.

La description ci-dessous de modes de réalisation, donnés à titre d'exemple non limitatif et représentés aux dessins annexés, fera ressortir plus clairement les caractéristiques et avantages de l'invention. Sur ces dessins :

La figure 1 est une vue partielle en élévation d'une jonction entre l'armature de dossier et l'armature d'assise d'un siège selon l'invention.

La figure 2 est une vue de détail, a plus grande échelle, de l'extrémité de l'armature du dossier portant l'axe de rabattement.

La figure 3 est une vue analogue à la Fig.1 en position de réglage de l'inclinaison.

Les figures 4 et 5 sont des vues analogues à la Fig.1, respectivement en position de déverrouillage en vue du rabattement du dossier, et en position rabattue.

Les figures 6, 7 et 8 sont des vues schématiques, de côté, d'un siège selon l'invention, respectivement en position d'utilisation, en position couchette et en position rabattue.

La figure 9 est une vue en coupe suivant la ligne 9-9 de la Fig.8, à échelle agrandie.

La figure 10 est une vue en coupe suivant la ligne 10-10 de la Fig.6, à échelle agrandie.

Les figures 11 et 12 sont des vues schématiques de côté de la liaison par l'axe de rabattement de l'armature d'assise et de l'armature du dossier d'un siège selon une variante de réalisation.

La figure 13 est une vue de détail, à plus grande échelle, partiellement en coupe, montrant le cavalier formant axe de rabattement verrouillé dans la lumière crantée.

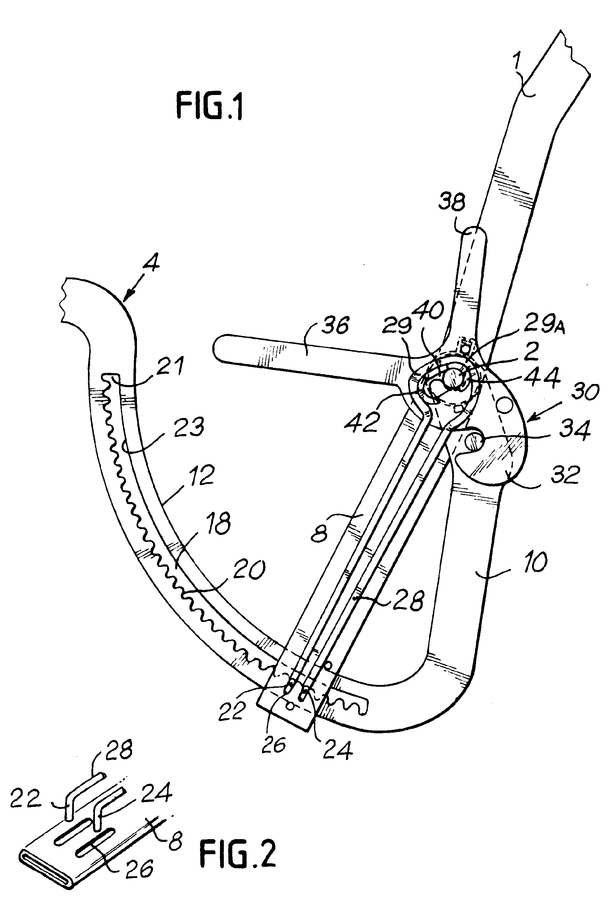

Le siège représenté sur les Fig.1 à 10, qui est par exemple un siège de véhicule automobile, comporte un dossier dont l'armature 1 est reliée par un axe d'inclinaison 2 à une armature d'assise 4 portée par un socle ou piètement 6 qui peut être fixe ou réglable. L'armature de dossier 1 est de préférence formée par un tube recourbé en U qui est prolongé et aplati, comme le montre la Fig.9, en dessous de l'articulation 2 pour former deux bras 8 sensiblement plats. De chaque côté du siège l'axe d'inclinaison 2 est en appui sur l'extrémité d'une branche 10 de l'armature d'assise qui est sensiblement verticale et est prolongée par une portion incurvée en arc de cercle 12 reliée à un cadre 14 de support d'un coussin de siège 16.

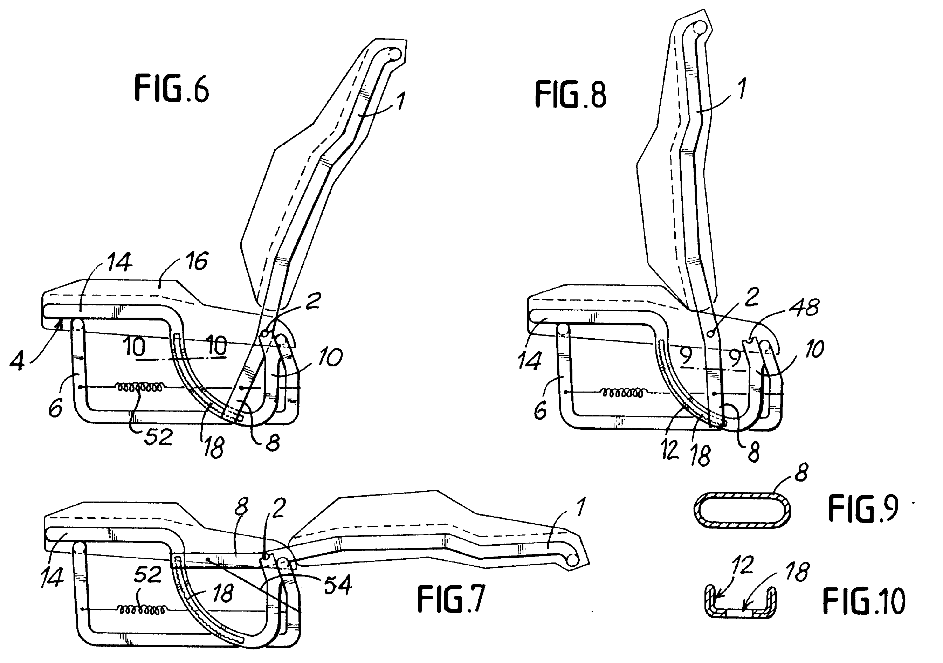

Cette armature d'assise est de préférence constituée par un tube de section circulaire formant le cadre 14 qui est aplati pour avoir une section en U dans la portion arquée 12 (Fig.10) et être plat dans la branche 10.

Dans le fond de la portion arquée 12 est ménagée une lumière longitudinale en arc de cercle 18 dont le bord inférieur comporte des crans arrondis 20. Comme le montre plus particulièrement la Fig.1, la longueur de la lumière 18 est telle qu'elle forme sensiblement un arc de 90° et que sa partie supérieure 21 est sensiblement dans le même plan horizontal que l'axe d'inclinaison 2.

Dans la lumière 8 sont engagés deux doigts 22 et 24 (Fig.2) qui traversent chacun une fente 26 du bras 8 du dossier. Les doigts 22 et 24 sont en fait les extrémités repliées des deux branches parallèles d'une tige 28 recourbée sur elle-même, sensiblement en épingle à cheveu ou en U. A l'opposé de ces doigts 22, 24, la partie courbée 29 de la tige 28 contourne l'axe d'inclinaison 2 et est reliée à un levier de déverrouillage 30 commandant le déplacement des doigts 22 et 24 dans les fentes 26 et par suite dans la lumière 18.

Dans le mode de réalisation représenté sur les Fig. 1 à 5, le levier 30 comporte un crochet 32, tourné vers le bras 8, qui est emboîté sur un pion 34 solidaire de la branche 10 de l'assise, et deux bras de manoeuvre respectivement 36 et 38 à l'opposé du crochet 32.

Dans la partie médiane du levier 30 est en outre pratiquée une lumière 40, de forme allongée, qui est emboîtée sur l'axe d'inclinaison 2. Cette lumière 40 est bordée à chacune de ses extrémités par un téton extérieur incurvé, respectivement 42 et 44, en contact avec la partie incurvée 29 de la tige 28.

En position normale d'utilisation du siège, l'axe d'inclinaison 2 est logé directement dans une encoche 48 ménagée à l'extrémité de la branche 10 de l'assise. Le crochet 32 est emboîté sur le pion de pivotement 34 et la partie supérieure de la lumière 40, c'est-à-dire le téton 44, est en appui sur l'axe d'inclinaison 2 qui est ainsi maintenu dans l'encoche 48. A l'extrémité de chaque bras 8 le doigt 22 ou 24 est engagé dans l'un des crans de la lumière 18 de sorte que le dossier est solidement immobilisé, par exemple dans la position redressée représentée sur la Fig. 1.

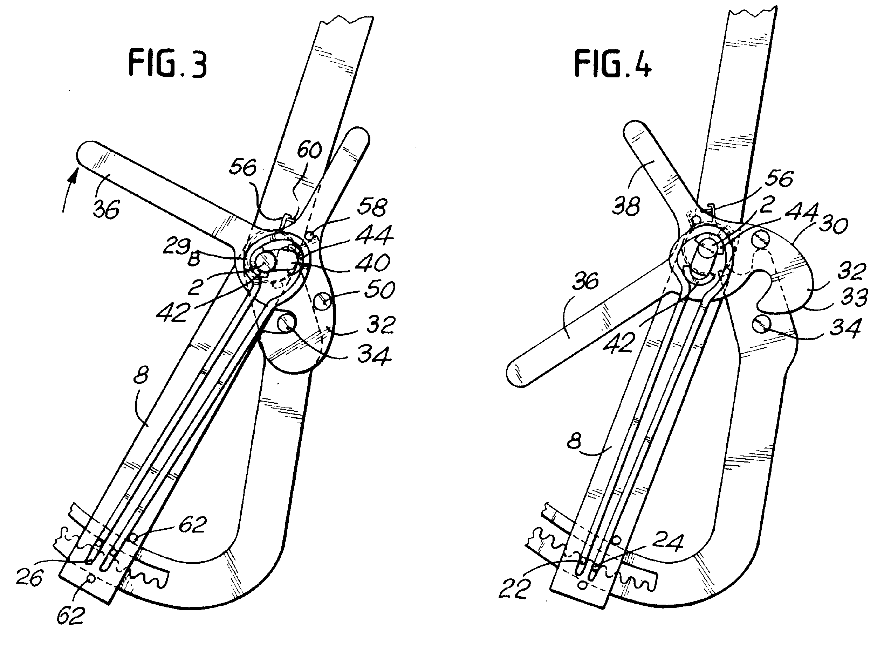

Pour modifier l'inclinaison du dossier 1, il suffit de soulever le bras de manoeuvre 36 du levier 30 pour faire pivoter ce levier dans le sens des aiguilles d'une montre autour du pion 34 jusqu'à la position représentée sur la Fig.3. Dans ce mouvement la lumière 40, qui est incurvée et est centrée sur le pion 34, glisse sur l'axe d'inclinaison 2. Par suite le téton supérieur 44, qui est en contact avec la face interne d'un coude extrême 29A de la tige 28, repousse ce dernier vers l'extérieur, c'est-à-dire vers la droite en considérant les Fig.1 et 2, en l'éloignant de la lumière crantée 18, 20 et plus précisément du cran 20 de réception du doigt 24. Le téton inférieur 42 effectue une trajectoire identique de sorte qu'il vient d'abord s'emboîter dans un coude latéral 29B de la tige 28, puis guide le déplacement de ce coude également vers l'extérieur et vers le haut. Les deux parties rectilignes de la tige 28 sont ainsi simultanément tirées vers le haut et latéralement tandis que les doigts 22 et 24 glissent dans les fentes 26 et quittent les crans 20 de la lumière 18. Ils restent dans cette dernière mais sont espacés à la fois de ses crans et de son bord lisse 23. L'extrémité du bras 8 est donc libéré et peut se déplacer librement le long de la lumière 18.

De préférence, les crochets 32 des deux côtés du siège sont reliés entre eux par une barre de liaison 50 et un seul des leviers est prolongé par des bras de manoeuvre de sorte qu'il suffit à l'usager de faire pivoter un bras 36 dans le sens des aiguilles d'une montre pour libérer la partie inférieure du dossier et permettre à ce dernier de pivoter autour de l'axe 2 qui joue le rôle d'axe d'inclinaison. Ce pivotement du dossier, c'est-à-dire le réglage de l'inclinaison, peut être obtenu manuellement par une simple action sur la partie supérieure du dossier ou par tout dispositif approprié. De préférence un ressort 52 associé à un câble 54 est monté entre le bras 8 du dossier et le socle 6 et tend à faire basculer le dossier 1 vers l'avant lorsque les doigts 22 et 24 sont déverrouillés.

Dès que le bras de manoeuvre 36 est relâché, un ressort de rappel 56, enroulé entre un pion 58 solidaire du levier et un ergot 60 solidaire du tube d'armature de dossier 1, fait basculer le levier 30 vers sa position de verrouillage. Les tétons 42 et 44 repoussent alors la tige 29, 28 en sens inverse et les doigts 22 et 24 se bloquent à nouveau dans deux crans successifs de la lumière 18.

Pendant tout le pivotement du bras 8, c'est-à-dire la modification de l'inclinaison du tube d'armature de dossier 1, l'axe d'inclinaison 2 reste emboîté dans l'encoche 48 et les doigts 22, 24 parcourent une trajectoire centrée sur cet axe. Un choix approprié de la course angulaire de ces doigts, c'est-à-dire de la longueur de la lumière 18, permet donc de déterminer de manière appropriée les variations d'inclinaison du dossier. Lorsque, comme dans le mode de réalisation représenté sur les Fig.6 et 7, la lumière 18 correspond à un arc de cercle voisin de 90°, de sorte que son extrémité supérieure est sensiblement dans le même plan que l'axe d'inclinaison 2, le dossier 1 peut passer d'une position redressée correspondant à la position normale d'utilisation telle que représentée sur la Fig.6, à une position pratiquement horizontale, dans le prolongement du cadre 14 de l'armature 16, telle que la position couchette représentée sur la Fig.7. De préférence un cavalier 62 fixé à ces deux extrémités dans le bras 8 de l'armature de dossier 1 entoure la portion incurvée 12 de l'armature d'assise de façon à glisser sur les bords supérieur et inférieur de cette portion 12 et à guider le déplacement du bras 8 le long de cette dernière.

Quelle que soit la position choisie pour le dossier, il est solidement maintenu par le double verrouillage, d'une part de l'axe d'inclinaison dans l'encoche 48, et d'autre part des doigts 22, 24 dans les crans 20 de la lumière 18.

Le verrouillage de l'axe 2 dans l'encoche 48 peut toutefois être supprimé afin de permettre de rabattre le dossier du siège vers l'avant de l'assise pour dégager l'espace situé derrière. Le levier de verrouillage 30 est alors déplacé dans le sens inverse des aiguilles d'une montre, par exemple au moyen du bras de manoeuvre 38 pour écarter le crochet 32 du pion 34. Le levier 30 pivote autour de l'axe d'inclinaison 2 de sorte que l'extrémité supérieure de la lumière 40, et notamment le téton 44, tourne autour de cet axe d'inclinaison en restant en contact avec lui, comme le montre la Fig.4. Les tétons 42 et 44 glissent également le long de la partie recourbée 29 de la tige 28 mais sans déplacer cette dernière de sorte que les doigts 22 et 24 restent emboîtés dans les crans 20 de la lumière 18. Par contre, lorsque le crochet 32 a quitté le pion 34 l'axe d'inclinaison 2 n'est plus verrouillé dans l'encoche 48 et peut être poussé hors de cette encoche. L'armature du dossier 1, 8 est alors totalement rabattue vers l'avant c'est-à-dire en direction du cadre d'assise 14. Au cours de ce pivotement, le doigt 24 qui est le plus proche de la branche 10 de l'armature d'assise sort progressivement du cran 20 dans lequel il était emboîté tandis que l'ensemble du dossier pivote autour de l'autre doigt 22 qui reste en contact étroit avec le cran dans lequel il est placé et constitue ainsi un axe de rabattement. La position extrême de rabattement est obtenue lorsque le doigt 24 vient buter contre le bord lisse 23 de la lumière 18. Pendant ce mouvement, la branche 8 est retenue par le cavalier 62 qui lui interdit tout déplacement axial et contribue ainsi au maintien du doigt 22 dans le cran 20 correspondant.

Il apparaîtra clairement que l'ampleur de ce rabattement est fonction de la longueur de la lumière 18, de la position de son extrémité inférieure par rapport à la branche 10 et de la position de l'axe de rabattement 22 dans cette lumière, c'est-à-dire de l'inclinaison du dossier à partir de laquelle est effectué le rabattement.

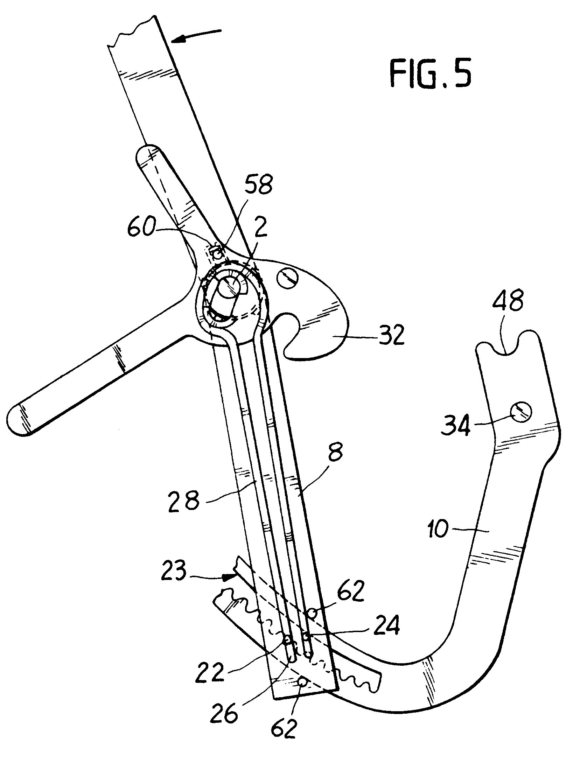

Le retour du dossier vers sa position normale d'utilisation s'effectue de manière inverse. Le bras de manoeuvre 38 est relâché et le ressort de rappel 56 fait basculer le levier 30 vers sa position de verrouillage en ramenant l'un à côté de l'autre le pion 58 et l'ergot 60. L'armature 8 du dossier pivote ensuite autour de l'axe de rabattement 22 jusqu'au moment où le doigt de butée 24 s'emboîte à nouveau dans un cran 20 de la lumière 18. Le dossier passe alors de la position de rabattement représentée sur la Fig.5 à une position intermédiaire dans laquelle la face avant 33 du crochet 32 vient buter contre le pion 34. Cette face avant ayant une forme arrondie, un effort supplémentaire sur le dossier, contre l'action du ressort 56, lui permet de glisser sur le pion jusqu'au moment où ce dernier se trouve en regard de l'entrée du crochet et peut s'emboîter dans celui-ci. Cette dernière étape du pivotement du levier 30 réintroduit l'axe 2 dans l'encoche 48 et l'y verrouille à nouveau, toute tentative de déplacement accidentel étant contrecarrée par le ressort 56.

La tige de liaison 50 est bien entendu déplacée en même temps que le levier de verrouillage 30, sa position sur ce levier étant telle qu'elle peut facilement contourner les bords de l'encoche 48 à la fois lors du rabattement vers l'avant et lors du retour du dossier en position d'utilisation.

Il apparaîtra clairement que le système de déverrouillage et notamment les tétons 42 et 44, peut être remplacé par un système à came de déplacement de la tige portant l'axe de rabattement.

De même, selon une variante de réalisation, les doigts 22 et 24, au lieu d'être indépendants, peuvent être reliés entre eux pour former un cavalier qui traverse la totalité de l'épaisseur du bras 8 et est solidaire de la tige 28, ce qui augmente la rigidité du dispositif.

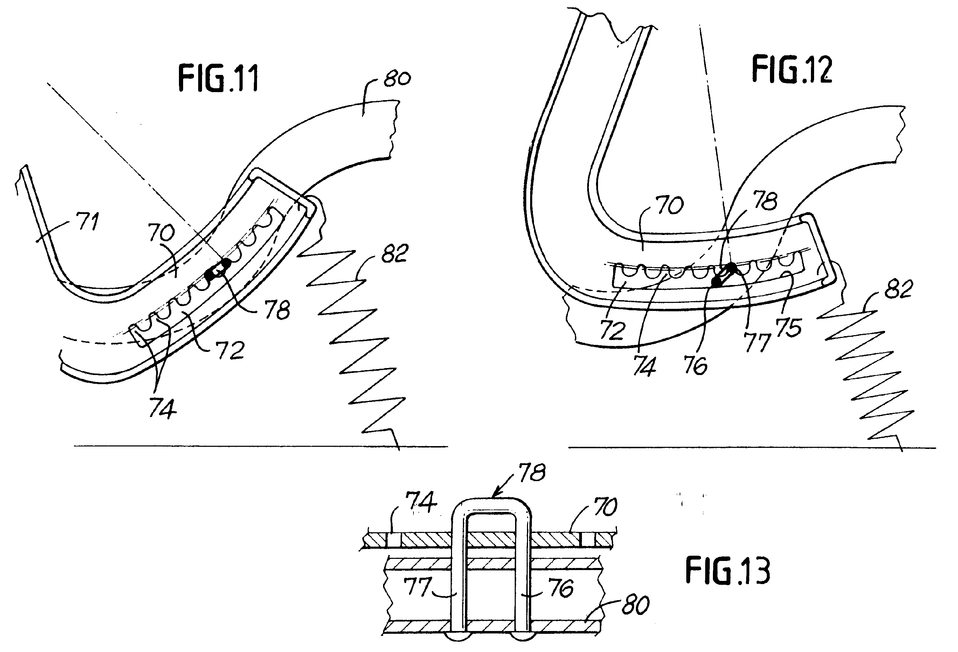

Selon un autre mode de réalisation l'axe de rabattement et la butée de limitation du rabattement sont portés par l'armature d'assise tandis que la lumière crantée est formée dans un prolongement recourbé de l'armature du dossier. Les Fig.11, 12 et 13 illustrent un exemple de ce mode de réalisation. Sur ces figures, un prolongement 70 recourbé vers le haut, d'une armature de dossier 71 comporte une lumière incurvée 72 munie de crans 74 à sa partie supérieure et centrée sur l'axe d'inclinaison du dossier (non représenté). Les deux branches 76 et 77 d'un cavalier 78 fixé dans le tube 80 d'une armature d'assise sont emboîtées dans deux crans successifs 74 pour verrouiller la partie inférieure de l'armature de dossier sur l'armature d'assise, tandis qu'un ressort 82 rappelle les crans 74 en direction du cavalier 78.

Le déverrouillage en vue du déplacement de la lumière 72 par rapport au cavalier, c'est-à-dire du réglage de l'inclinaison du dossier, est obtenu en déplaçant la partie recourbée 70 vers le haut de façon à écarter les crans 74 des branches 76 et 77 du cavalier. Ce déplacement est obtenu au moyen d'un levier de verrouillage analogue à celui décrit en regard de la Fig.1, ou même au moyen d'un levier du type de celui décrit dans la demande de brevet français FR-A-2 630 378 (publiée le 27/10/1989 et analogue à EP-A-0 341 105, publiée le 08/11/1989) de la Demanderesse.

De la même manière l'axe d'inclinaison du dossier peut être déverrouillé pour permettre le rabattement de ce dernier en direction de l'assise. Dans ce cas la partie recourbée 70 pivote vers l'avant autour de l'une des branches 77 au cavalier tandis que le cran 74 dans lequel est emboîté l'autre branche 76 s'écarte de cette dernière et que le bord opposé 75 de la lumière, qui est lisse, s'en rapproche. Lorsque le bord lisse 75 vient buter contre la branche 76 du cavalier, le mouvement de rabattement est arrêté. Un pivotement en sens inverse ramène les crans 74 sur chacune des branches 76 et 77 et rétablit le verrouillage de l'armature de dossier et de l'armature d'assise autour de l'axe de rabattement.

Le cavalier est de préférence fixé sur le tube d'armature d'assise par soudage ou rivetage de sorte que l'ensemble présente une grande rigidité.

## Revendications

1. Siège rabattable et inclinable comportant une armature d'assise (4) et une armature de dossier (1) reliées entre elles par deux axes espacés et parallèles (2) et (22, 76) formant un axe d'inclinaison et un axe de rabattement, l'axe d'inclinaison (2) étant porté par le dossier et verrouillé sur l'assise, tandis que l'axe de rabattement (22, 76) est solidaire de l'une de ces armatures et emboîté dans une lumière crantée (18, 72) de l'autre armature, caractérisé en ce que l'axe de rabattement (22, 77) est formé par l'une des branches d'un organe (28, 78) dont une deuxième branche, parallèle à la première, (24, 76) est également emboîtée dans la lumière crantée et forme une butée de limitation du rabattement.

2. Siège suivant la revendication 1, caractérisé en ce que l'axe de rabattement (22) et la butée (24) sont formés aux extrémités d'une tige (28) recourbée autour de l'axe d'inclinaison (2) et déplacée par un levier de déverrouillage (30).

3. Siège suivant la revendication 1, caractérisé en ce que l'axe de rabattement (77) et la butée (76) sont constitués par les deux branches d'un cavalier fixe (78) emboîté dans la lumière crantée d'un organe susceptible de pivoter par rapport à l'une de ces branches.

4. Siège suivant l'une des revendications précédentes, caractérisé en ce que la lumière crantée comporte un bord lisse (23, 75) qui entre en contact avec la branche de butée.

5. Siège suivant l'une des revendications précédentes, caractérisé en ce qu'il comporte un levier de verrouillage (30) formant un crochet (32) de coopération avec un pion (34) solidaire de l'armature d'assise (10) et percé d'une lumière (40) traversée par l'axe d'inclinaison (2) et centrée sur le pion (34).

6. Siège suivant la revendication 5, caractérisé en ce que la tige recourbée (28) est en appui sur les extrémités de la lumière (40) du levier de déverrouillage (30) de sorte qu'elle pivote avec cette lumière entre les positions de verrouillage et de déverrouillage de l'axe de rabattement (22).

7. Siège suivant l'une des revendications précédentes, caractérisé en ce que l'axe d'inclinaison (2) est logé dans une encoche (48) de l'extrémité d'une branche sensiblement verticale de l'armature d'assise (4).

8. Siège suivant l'une des revendications 5 à 7, caractérisé en ce que le levier de déverrouillage (30) comporte au moins un bras (36, 38) de commande de son pivotement dans un sens autour du pion (34) porté par l'armature d'assise et en sens inverse autour de l'axe d'inclinaison (2) vers une position de libération de l'axe d'inclinaison (2).

9. Siège suivant l'une des revendications 5 à 8, caractérisé en ce qu'un ressort (56) de rappel du levier (30) en position de verrouillage est monté entre ce levier et l'armature du dossier (1).

10. Siège suivant l'une des revendications 4 à 9, caractérisé en ce que la lumière crantée est ménagée dans une portion en arc de cercle (12) de l'armature d'assise (4) et a une partie supérieure (21) sensiblement dans le même plan que l'axe d'inclinaison (2), de sorte que le dossier peut être placé pratiquement dans le prolongement de l'assise du siège.

11. Siège suivant l'une des revendications précédentes, caractérisé en ce que les armatures d'assise et de siège sont formées par des éléments tubulaires de section circulaire aplatis localement.

**Patentansprüche**

1. Umklappbarer und neigbarer Sitz mit einem Sitzelementrahmen (4) und einem Rückenlehnenrahmen (1), die miteinander durch zwei voneinander entfernte und zueinander parallele Achsen (2) und (22, 76) verbunden sind, die eine Neigungsachse und eine Umklappachse bilden, wobei die Neigungsachse (2) von der Rückenlehne getragen ist und auf dem Sitzelement verriegelt ist, während die Umklappachse (22, 76) mit einem dieser Rahmen fest verbunden ist und in ein mit Rasten versehenes Langloch (18, 72) des anderen Rahmens eingesteckt ist, dadurch gekennzeichnet, daß die Umklappachse (22, 77) von einem der Schenkel eines Organs (28, 78) geformt ist, von dem ein zweiter, zum ersten paralleler Schenkel (24, 76) ebenfalls in das mit Rasten versehene Langloch eingesteckt ist und einen Anschlag zur Begrenzung der Umklappung bildet.

2. Sitz nach Anspruch 1, dadurch gekennzeichnet, daß die Umklappachse (22) und der Anschlag (24) an den Enden einer Stange (28) geformt sind, die um die Neigungsachse (2) herumgebogen ist und durch einen Entriegelungshebel (30) bewegt ist.

3. Sitz nach Anspruch 1, dadurch gekennzeichnet, daß die Umklappachse (77) und der Anschlag (76) aus den beiden Schenkeln eines feststehenden Bügels (78) bestehen, der in das mit Rasten versehene Langloch eines Organs eingesteckt ist, das bezüglich eines dieser Schenkel verschwenken kann.

4. Sitz nach einem der vorhergehenden Ansprüche, dadurch gekennzeichnet, daß das mit Rasten versehene Langloch einen glatten Rand (23, 75) aufweist, der mit dem Anschlagschenkel in Kontakt tritt.

5. Sitz nach einem der vorhergehenden Ansprüche, dadurch gekennzeichnet, daß er einen Verriegelungshebel (30) besitzt, der einen Haken (32) bildet, der mit einem mit dem Sitzelementrahmen (10) fest verbundenen Bolzen (34) zusammenwirkt, und mit einem Langloch (40) versehen ist, das von der Neigungsachse (2) durchquert ist und auf den Bolzen (34) zentriert ist.

6. Sitz nach Anspruch 5, dadurch gekennzeichnet, daß die gebogene Stange (28) an den Enden des Langlochs (40) des Entriegelungshebels (30) anliegt, so daß sie sich mit dem Langloch zwischen der Verriegelungsstellung und der Entriegelungsstellung der Umklappachse (22) verschwenkt.

7. Sitz nach einem der vorhergehenden Ansprüche, dadurch gekennzeichnet, daß die Neigungsachse (2) in einer Kerbe (48) des Endes eines im wesentlichen vertikalen Schenkels des Sitzelementrahmens (4) sitzt.

8. Sitz nach einem der Ansprüche 5 bis 7, dadurch gekennzeichnet, daß der Entriegelungshebel (30) wenigstens einen Betätigungsarm (36, 38) für seine Verschwenkung in einer Richtung um den von dem Sitzelementrahmen getragenen Bolzen (34) und in der entgegengesetzten Richtung um die Neigungsachse (2) auf eine Stellung der Freigabe der Neigungsachse (2) zu besitzt.

9. Sitz nach einem der Ansprüche 5 bis 8, dadurch gekennzeichnet, daß eine Feder (56) zur Rückholung des Hebels (30) in die Verriegelungsstellung zwischen dem Hebel und dem Rückenlehnenrahmen (1) montiert ist.

10. Sitz nach einem der Ansprüche 4 bis 9, dadurch gekennzeichnet, daß das mit Rasten versehene Langloch in einem kreisbogenförmigen Teil (12) des Sitzelementrahmens (4) vorgesehen ist und einen oberen, im wesentlichen in derselben Ebene wie die Neigungsachse (2) liegenden Teil (21) besitzt, so daß die Rückenlehne praktisch in die Verlängerung des Sitzelements des Sitzes gebracht werden kann.

11. Sitz nach einem der vorhergehenden Ansprüche, dadurch gekennzeichnet, daß die Rahmen des Sitzelements und der Rückenlehne von rohrförmigen Elementen mit kreisförmigem Querschnitt geformt sind, die örtlich abgeflacht sind.

## Claims

1. Tiltable and rake-adjustable seat possessing a squab frame (4) and a backrest frame (1), mutually connected by two spaced and parallel pivots (2) and (22, 76) forming a rake pivot and a tilting pivot, the rake pivot (2) being carried by the backrest and bolted to the squab, while the tilting pivot (22, 76) is fixed to one of these frames and fitted into a serrated slot (18, 72) in the other frame, characterised in that the tilting pivot (22, 77) is formed by one of the branches of a member (28, 78) of which a second branch, parallel to the first (24, 76), is likewise fitted into the serrated slot and forms a stop for limiting tilting.

2. Seat according to Claim 1, characterised in that the tilting pivot (22) and the stop (24) are formed at the ends of a rod (28) which is bent about the rake pivot (2) and displaced by an unlocking lever (30).

3. Seat according to Claim 1, characterised in that the tilting pivot (77) and the stop (76) are formed by the two branches of a fixed staple (78) fitted into the serrated slot of a member capable of pivoting relative to one of these branches.

4. Seat according to one of the preceding claims, characterised in that the serrated slot possesses a smooth edge (23, 75) which enters into contact with the stop branch.

5. Seat according to one of the preceding claims, characterised in that it possesses a locking lever (30) forming a hook (32) interacting with a pin (34) fixed to the squab frame (10), and pierced by a slot (40) through which passes the rake pivot (2) and which is centred on the pin (34).

6. Seat according to Claim 5, characterised in that the bent rod (28) bears on the ends of the slot (40) of the unlocking lever (30) in a manner such that it pivots with this slot between the locking and unlocking positions of the tilting pivot (22).

7. Seat according to one of the preceding claims, characterised in that the rake pivot (2) is accommodated in a notch (48) in the end of a substantially vertical branch of the squab frame (4).

8. Seat according to one of Claims 5 to 7, characterised in that the unlocking lever (30) possesses at least one arm (36, 38) controlling its pivoting in one direction around the pin (34) carried by the squab frame and in the opposite direction around the rake pivot (2) towards a position in which the rake pivot (2) is released.

9. Seat according to one of Claims 5 to 8, characterised in that a spring (56) for restoring the lever (30) to the locking position is mounted between this lever and the frame of the backrest (1).

10. Seat according to one of Claims 4 to 9, characterised in that the serrated slot is made in an arcuate portion (12) of the squab frame (4) and has an upper part (21) substantially in the same plane as the rake pivot (2), in a manner such that the backrest can be positioned virtually in the extension of the squab of the seat.

11. Seat according to one of the preceding claims, characterised in that the squab and seat frames are formed by locally flattened tubular elements of circular section.

FIG.1

FIG.2

FIG. 4

FIG. 3

FIG.5

FIG.6

FIG.8

1

14  16

2

10  10

10

4

6

52  18  8

FIG.7

8  2

14

52

18  54

1

EP 0 404 628 B1

14

2  48

9  9

10

6

12  18  8

8

FIG.9

12  18

FIG.10

FIG.11

FIG.12

FIG.13